# EUROPEAN PATENT APPLICATION

(11) **EP 4 756 984 A1**
(43) Date of publication of application: **10.06.2026**
(21) Application number: 24918990.3
(22) Date of filing: 20.12.2024
(51) Int. Cl.: H01M 10/44, H01M 4/04, H01M 10/04, H02J 7/00

(54) **BATTERY ACTIVATION PROCESS FACILITY**

(30) Priority: 19.01.2024 KR 20240009018
(71) Applicant: LG ENERGY SOLUTION, LTD., Seoul 07335 (KR)
(72) Inventor: Ryu, Je-Chang, Daejeon 34122 (KR); Kim, Myung-Hwan, Daejeon 34122 (KR); Kim, Seung-Choo, Daejeon 34122 (KR)
(74) Representative: Goddar, Heinz J.
(86) International application number: PCT/KR2024/020780
(87) International publication number: WO 2025/154966

(57) **Abstract**

A battery activation process facility according to the present disclosure includes a plurality of charging and discharging devices for charging and discharging battery cells; a container rack configured to load the plurality of charging and discharging devices in multiple stages; a catwalk installed at an uppermost end of the container rack as a passage for workers to pass through; a bus duct positioned at a certain height from the uppermost end of the container rack; and a duct support unit mounted on the container rack or the catwalk and supporting the bus duct.

## Description

### TECHNICAL FIELD

The present disclosure relates to a battery activation process facility, and more specifically, to a battery activation process facility facilitating installation and maintenance of a catwalk and a bus duct.

This application is based on and claims priority from Korean Patent Application No. 10-2024-0009018, filed on January 19, 2024, with the Korean Intellectual Property Office, the disclosure of which is incorporated herein in its entirety by reference.

### BACKGROUND ART

The production of a secondary battery is largely divided into 'pre-process' and 'post-process'. The electrode process of making electrode plates of the positive electrode and the negative electrode and the assembly process of processing and assembling the electrodes and raw materials to make finished products fall under the pre-process, while the activation process of activating the polarity of the battery by alternating charging and discharging and the life test of calculating the life, capacity, and efficiency of the battery fall under the post-process.

The battery immediately after the assembly process only has a form and may not function at all. This battery is subjected to the activation work of charging and discharging the battery to give electrical characteristics thereto, the aging work of waiting for the positive and negative electrode materials to be sufficiently impregnated with electrolyte, and the degassing work that is limited to a pouch battery but removes internal gas if necessary after repeating this process sufficiently, and then is equipped with the battery performance. The battery that has undergone this process is inspected for internal resistance and open circuit voltage to be given a final grade, and the battery cells are shipped.

Meanwhile, a conventional battery activation process facility includes charging and discharging devices, a device housing capable of loading the charging and discharging devices in multiple stages, and a bus duct for transmitting power from an external power system to the charging and discharging devices.

As an example, the bus duct is installed on the ceiling of a factory or warehouse where the activation process facility is built. For example, the bus duct is constructed by installing supports on the factory ceiling along the tracks of the bus duct and hanging the bus duct on the supports.

However, as the battery activation process facility becomes larger, the weight of the bus duct increases significantly, which may cause excessive load on the factory ceiling, thereby making it impossible to construct the ceiling for safety reasons. Additionally, there are problems such as difficulty in calculating the ceiling load before constructing the ceiling, difficulty in wiring between the bus duct and the charging and discharging devices when the ceiling height of the factory is much higher than an uppermost end of the device housing, and difficulty in accessing and working on the bus duct during maintenance because the bus duct is hung high on the ceiling.

### DISCLOSURE

### Technical Problem

The present disclosure is designed to solve the above-described problems, and therefore the present disclosure is directed to providing a battery activation process facility that does not require the construction of a bus duct and a catwalk on the ceiling of a factory or building as conventionally.

Additionally, the present disclosure is directed to providing a battery activation process facility that facilitates inspection and maintenance of tracks of the bus duct and allows work to be performed more safely than conventionally.

Technical problems to be solved by the present disclosure are not limited to the above-described problems, and other problems not mentioned herein may be clearly understood by those skilled in the art from the following description of the present disclosure.

### Technical Solution

A battery activation process facility according to one aspect of the present disclosure may include a plurality of charging and discharging devices for charging and discharging battery cells; a container rack configured to load the plurality of charging and discharging devices in multiple stages; a catwalk installed at an uppermost end of the container rack as a passage for workers to pass through; a bus duct positioned at a certain height from the uppermost end of the container rack; and a duct support unit mounted on the container rack or the catwalk and supporting the bus duct.

The container rack may be provided in a plurality of layers, and each layer may include a device receiving portion accommodating the charging and discharging devices; and a passage portion allowing the workers to pass through.

The device receiving portion and the passage portion may continue to be parallel to each other along a first direction, and the catwalk and the bus duct may be respectively installed above the device receiving portion and above the passage portion of the container rack positioned on an uppermost layer.

The passage portion may include a pair of upper beam frames spaced apart along a second direction intersecting the first direction and extending parallel to each other along the first direction, and the duct support unit may be fixedly coupled to the pair of upper beam frames at predetermined intervals along the pair of upper beam frames and may be provided to support the bus duct below the bus duct.

The duct support unit may include a first beam connection portion and a second beam connection portion that are detachably attached to one side and the other side of the pair of upper beam frames, respectively; a first vertical portion extending vertically from the first beam connection portion and a second vertical portion extending vertically from the second beam connection portion; and a duct mounting portion that is connected to an upper end of the first vertical portion and an upper end of the second vertical portion and is provided to allow the bus duct to be seated and mounted.

The bus duct may include an enclosure having an internal space capable of accommodating a metal conductor; and connection beams provided at both lower edge regions of the enclosure in the width direction of the enclosure, wherein the connection beams may include mounting grooves provided at predetermined intervals along the extension direction of the enclosure and fitted into the duct mounting portion.

The battery activation process facility may further include a plurality of distribution boxes coupled to the bus duct at predetermined intervals along the extension direction of the bus duct.

The catwalk and the bus duct may be disposed adjacent to each other in the width direction of the container rack, and the plurality of distribution boxes may be attached to one surface of the bus duct facing the catwalk.

The catwalk may include a floor plate fixedly coupled to the uppermost end of the container rack; and a first railing frame and a second railing frame that are respectively disposed upright at both edges of the floor plate in the width direction.

The bus duct may be fixedly coupled to an upper end of any one of the first railing frame and the second railing frame.

The plurality of distribution boxes may be attached to an upper surface of the bus duct.

The bus duct may be disposed in a space above the floor plate of the catwalk, and the duct support unit may include a first support unit having one side coupled to the first railing frame and the other side coupled to the bus duct; and a second support unit having one side coupled to the second railing frame and the other side coupled to the bus duct.

The plurality of distribution boxes may be attached to a lower surface of the bus duct.

### Advantageous Effects

According to the present disclosure, a battery activation process facility that does not require the construction of a bus duct on the ceiling of a factory or building as conventionally may be provided.

Therefore, there is no need to calculate the ceiling load when constructing the bus duct, and since a catwalk is provided at an uppermost end of the container rack together with the bus duct, it is easy to inspect and maintain tracks of the bus duct, and work may be performed more safely than conventionally.

In addition, the technical effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 is a schematic perspective view of a battery activation process facility to which bus ducts and catwalks are applied according to one embodiment of the present disclosure.
FIG. 2 is a schematic plan view of a battery activation process facility according to one embodiment of the present disclosure.
FIG. 3 is a schematic side view of a battery activation process facility according to one embodiment of the present disclosure.
FIG. 4 is an enlarged view of a portion of a battery activation process facility according to one embodiment of the present disclosure.
FIG. 5 is a view showing that the bus duct unit and the duct support unit are separated from each other in FIG. 4.
FIG. 6 is a view showing the configuration of a duct support unit according to one embodiment of the present disclosure.
FIG. 7 is a view schematically illustrating a bus duct installation configuration of a battery activation process facility according to another embodiment of the present disclosure.
FIG. 8 is a view schematically illustrating a bus duct installation configuration of a battery activation process facility according to still another embodiment of the present disclosure.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

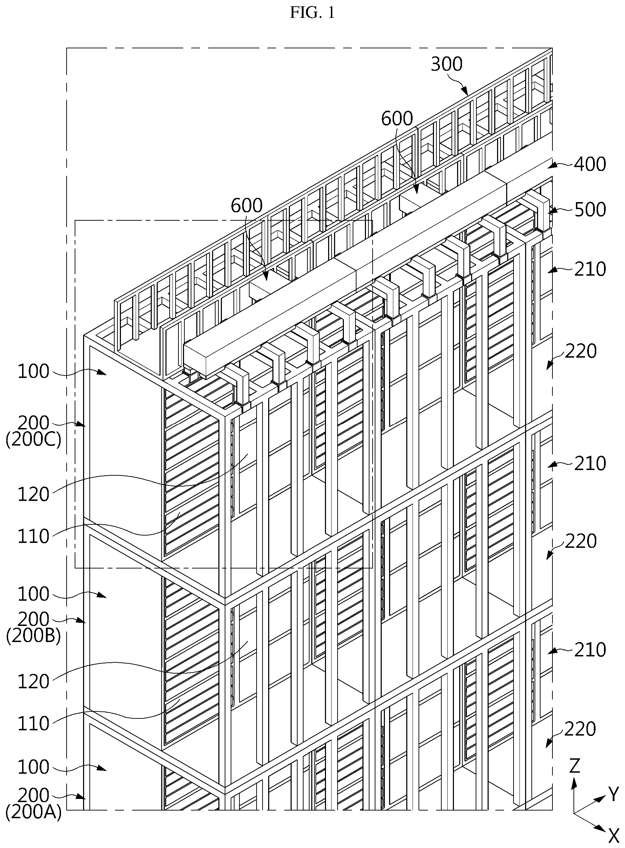

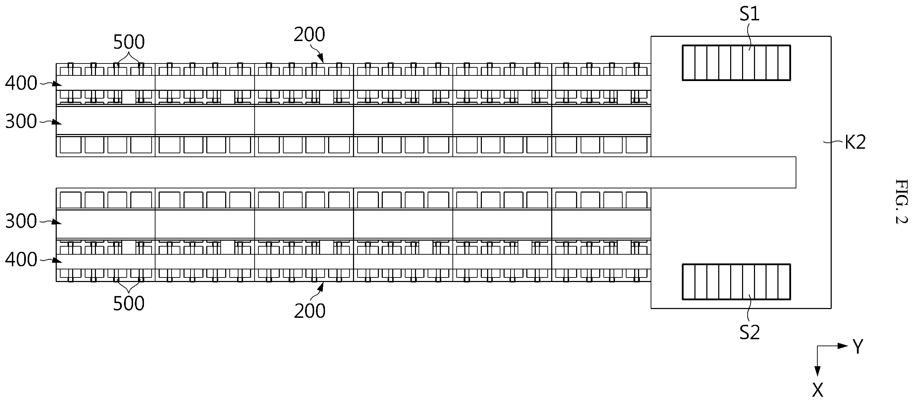

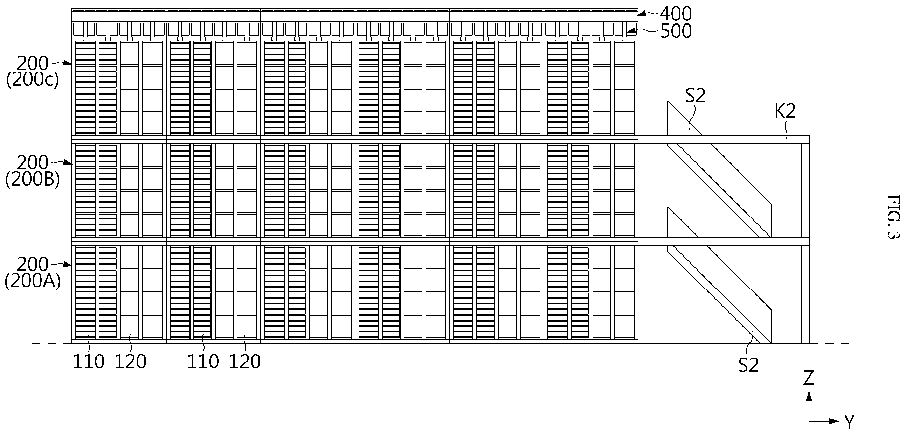

FIG. 1 is a schematic perspective view of a battery activation process facility to which bus ducts and catwalks are applied according to one embodiment of the present disclosure, FIG. 2 is a schematic plan view of a battery activation process facility according to one embodiment of the present disclosure, and FIG. 3 is a schematic side view of a battery activation process facility according to one embodiment of the present disclosure.

Referring to FIGS. 1 to 3, a battery activation process facility according to one embodiment of the present disclosure includes a plurality of charging and discharging devices 100, a container rack 200, a catwalk 300, a bus duct 400, and a duct support unit 500.

The charging and discharging device 100 may be composed of a power supply unit 110, a jig unit 120, and an external enclosure that accommodates the power supply unit 110 and the jig unit 120.

Although not illustrated in detail for convenience of drawing, the power supply unit 110 may include an AC/DC converter that receives AC power from an external power system and primarily creates DC power, and a DC/DC converter that supplies a precise charging current to each battery cell from the DC power.

The jig unit 120 may include a charging and discharging jig (not shown) that receives power from multiple battery cells and the power supply unit 110 and applies voltage or current to the battery cells. The jig unit 120 and the power supply unit 110 may be connected by, for example, multiple power cables (not shown).

The external enclosure may have a box or frame structure capable of accommodating the jig unit 120 and the power supply unit 110, and may be provided in a form that is easy to stack.

The container rack 200 refers to a structure for loading and storing the plurality of charging and discharging devices 100 in multiple stages. For example, the container rack 200 may be provided in a roughly cuboidal structure by assembling materials such as rack shelves, angles, bars, and the like.

The container rack 200 may be provided in a plurality of layers. For reference, stairs S1, S2 and a deck K2 may be provided at least one end of the container rack 200 to move between layers of this container rack 200.

The container rack 200 may include, on each layer, a device receiving portion 210 accommodating the charging and discharging devices 100 and a passage portion 220 allowing workers to pass through. For example, as illustrated in FIG. 1, the container rack 200 according to the present embodiment may include a first container rack 200A, a second container rack 200B, and a third container rack 200C that are sequentially stacked from the ground in a three-layer structure. The plurality of charging and discharging devices 100 may be loaded in multiple stages in the internal space of this container rack 200.

The container rack 200 may be provided with the device receiving portion 210 and the passage portion 220 on each layer. The device receiving portion 210 and the passage portion 220 may be configured to continue to be adjacent to and parallel to each other along the first direction (Y direction). The charging and discharging devices 100 are disposed in this device receiving portion 210, and the passage portion is utilized as a space where the workers may walk. Accordingly, the workers may easily access the charging and discharging devices disposed in the device receiving portion 210 and may inspect and maintain the charging and discharging devices 100 if necessary.

The catwalk 300 may be installed at an uppermost end of the container rack 200, as illustrated in FIGS. 1 and 2. The catwalk 300 is a component that serves as a passage through which the workers may climb to the uppermost end of the container rack 200 and move safely.

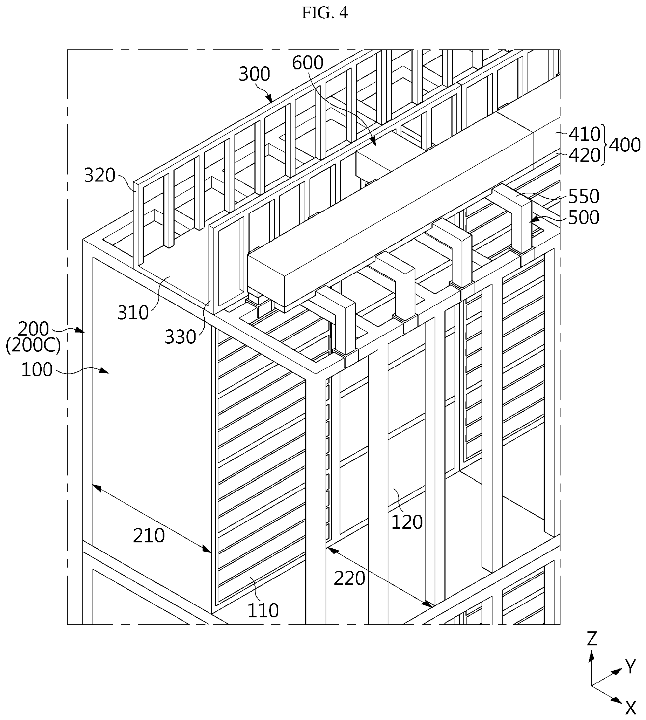

As shown in FIG. 4, the catwalk 300 includes a floor plate 310 fixedly coupled to the uppermost end of the container rack 200, and a first railing frame 320 and a second railing frame 330 that are respectively disposed upright at both edges of the floor plate 310 in the width direction (X direction), and may extend along the length direction (Y direction) of the container rack 200.

The bus duct 400 refers to a component that serves as tracks for transmitting power from an external power system to the charging and discharging devices 100. The bus duct 400 includes an enclosure 410 that accommodates a metal conductor (bus bar) for allowing current to flow therein. The enclosure 410 may be provided in the shape of a tube made of metal. This enclosure 410 may be manufactured in units of a predetermined length and then configured to be connected to each other.

Referring to FIGS. 1 to 3, the bus duct 400 may be installed at the uppermost end of the container rack 200 so as to be positioned at a certain height from the uppermost end of the container rack 200. This bus duct 400 may extend in the same direction (Y direction) as the extension direction of the container rack 200.

The duct support unit 500 is a means for positioning the bus duct 400 at a certain height from the uppermost end of the container rack 200. As shown in FIG. 4, the duct support unit 500 is provided at predetermined intervals along the extension direction of the bus duct 400, and may be configured such that one side is mounted on the container rack 200 and the other side supports the bus duct 400.

In the present embodiment, the catwalk 300 and the bus duct 400 may be respectively installed above the device receiving portion 210 and above the passage portion 220 of the third layer container rack 200, which is the uppermost layer. In this case, the catwalk 300 and the bus duct 400 may be disposed adjacent to each other in the width direction of the container rack 200.

Hereinafter, with reference mainly to FIGS. 1, 4 to 6, an installation example of the duct support unit 500 and the bus duct 400 according to the present embodiment will be described in more detail.

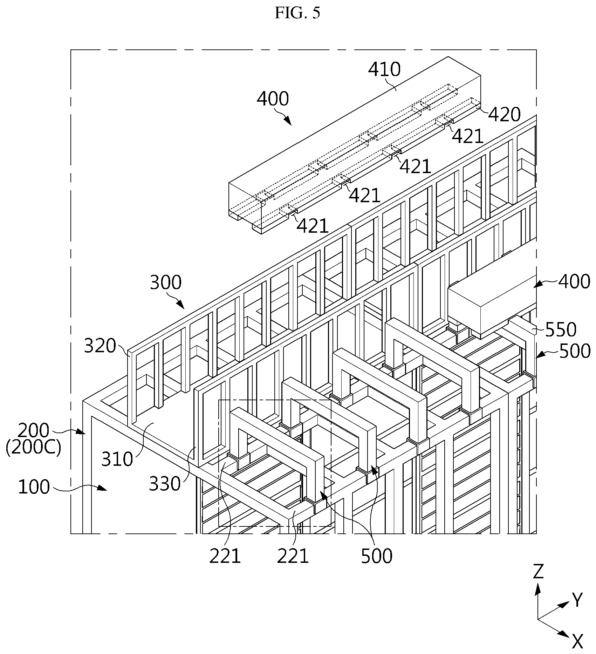

The passage portion 220 of the container rack 200 according to the present embodiment includes a pair of upper beam frames 221 spaced apart along a second direction (X direction) intersecting the first direction (Y direction) and extending parallel to each other along the first direction (Y direction), as shown in FIG. 5.

The duct support unit 500 may be fixedly coupled to the pair of upper beam frames 221 at predetermined intervals along the pair of upper beam frames 221 and may be provided to support the bus duct 400 below the bus duct 400.

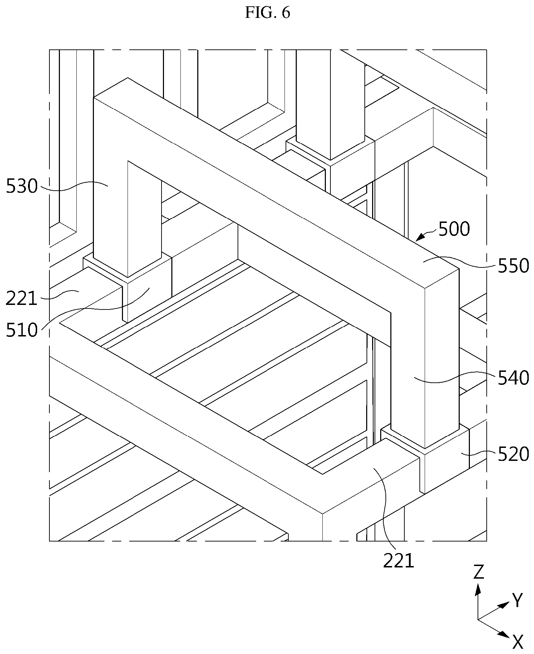

For example, as illustrated in FIG. 6, the duct support unit 500 may include a first beam connection portion 510 and a second beam connection portion 520 that are detachably attached to one side and the other side of the pair of upper beam frames 221, respectively, a first vertical portion 530 extending vertically from the first beam connection portion 510 and a second vertical portion 540 extending vertically from the second beam connection portion 520, and a duct mounting portion 550 that is connected to an upper end of the first vertical portion 530 and an upper end of the second vertical portion 540 and is provided to allow the bus duct 400 to be seated and mounted. This duct support unit 500 may preferably be made of a metal material having high rigidity to stably support the heavy bus duct 400.

The first beam connection portion 510 and the second beam connection portion 520 may be provided to surround the perimeter of the upper beam frame 221. The first beam connection portion 510 and the second beam connection portion 520 may be fixedly coupled to the upper beam frame 221 by a coupling member, for example, a bolt (not shown).

Although not illustrated, the first vertical portion 530 and the second vertical portion 540 may be configured to be adjustable in height so that the height of the bus duct 400 may be appropriately changed. The first beam connection portion 510, the second beam connection portion 520, the first vertical portion 530, the second vertical portion 540, and the duct mounting portion 550 may be integrally formed or configured to be assembled with each other.

The bus duct 400 according to the present embodiment may further include a connection beam 420 to be stably seated on the duct mounting portion 550. Specifically, referring to FIG. 5, the connection beams 420 may be provided at both lower edge regions of the enclosure 410 in the width direction of the enclosure 410. And, the connection beam 420 may include a mounting groove 421 provided at predetermined intervals along the extension direction of the enclosure 410 and fitted into the duct mounting portion 550.

According to the configuration of the present embodiment described above, the bus duct 400 may be positioned at a certain height from the uppermost end of the container rack 200 in a state where the mounting groove 421 is fitted into the duct mounting portion 550 and supported by the duct support unit 500.

Meanwhile, the battery activation process facility according to the present embodiment may further include a plurality of distribution boxes 600 coupled to the bus duct 400 at predetermined intervals along the extension direction of the bus duct 400. The distribution box 600 may refer to a device that distributes power received through the bus duct 400.

The distribution box 600 may include a main circuit breaker, a plurality of bus bars, a branch circuit breaker, and the like therein, and may be electrically connected to bus bars inside the bus duct 400, for example, with current flowing primarily toward the main circuit breaker. Although not illustrated in detail, the distribution box 600 may include a connection terminal protruding outward, and the connection terminal may be provided to be connected to the bus duct 400 in a plug-in manner. Additionally, the distribution box 600 and the power supply unit 110 of the charging and discharging device 100 may be connected by a power cable (not shown) or the like.

Referring to FIG. 4, the bus duct 400 is disposed adjacent to the catwalk 300 in the width direction of the container rack 200. The plurality of distribution boxes 600 may be attached to one surface of this bus duct 400. Here, one surface of the bus duct 400 is a surface facing the catwalk 300. In this case, the workers may easily perform a track inspection inside the bus duct 400 and an inspection or replacement of the power cable connecting the distribution box 600 and the charging and discharging device 100 at the catwalk 300.

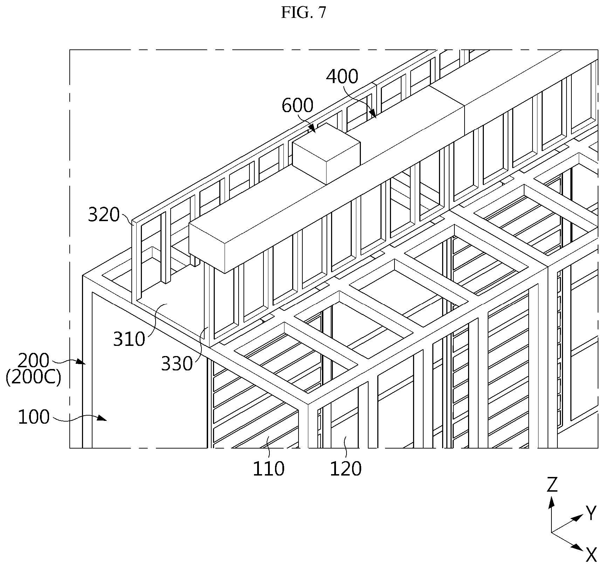

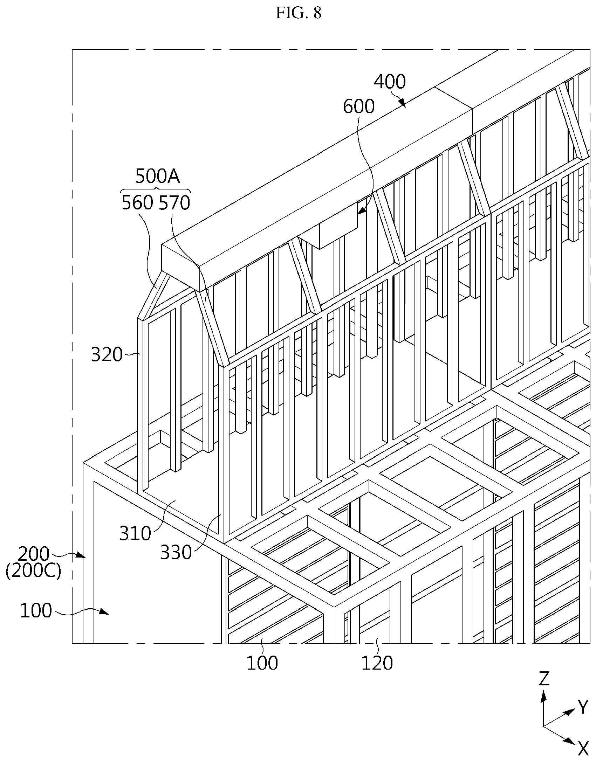

Next, referring to FIGS. 7 and 8, respectively, a battery activation process facility according to other embodiments of the present disclosure will be briefly described. The same member numbers as those of the above-described embodiment represent the same members, and duplicate descriptions of the same members will be omitted, and differences from the above-described embodiment will be mainly described.

FIG. 7 is a view schematically illustrating a bus duct 400 installation configuration of a battery activation process facility according to another embodiment of the present disclosure.

First, referring to FIG. 7, the battery activation process facility according to another embodiment of the present disclosure may be configured such that the bus duct 400 is fixed to an upper end of any one of the first railing frame 320 and the second railing frame 330 of the catwalk 300 when compared with the above-described embodiment. That is, in another embodiment of the present disclosure, one of the first railing frame 320 and the second railing frame 330 functions as a duct support unit 500.

For example, the bus duct 400 may be installed on the upper end of the second railing frame 330 of the catwalk 300. Although schematically illustrated for convenience of drawing, a structure of being inserted and coupled to the upper end of the second railing frame 330 may be applied to the lower surface of the bus duct 400, or a bracket or the like may be additionally mounted on the upper end of the second railing frame 330 and the bus duct 400 and the bracket may be bolted together, so that the bus duct 400 may be more stably fixed to the upper end of the second railing frame 330.

In another embodiment of the present disclosure, the plurality of distribution boxes 600 may be attached to the upper surface of the bus duct 400, so that the distribution boxes 600 do not interfere with the workers when they pass through the catwalk 300.

According to the embodiment as shown in FIG. 7, the configuration of the duct support unit 500 may be simplified, and the distance between the catwalk 300 and the bus duct 400 may be made closer than in the above-described embodiment. Accordingly, it may be easier for the workers to maintain and replace the bus duct 400 or the distribution box 600 on the catwalk 300.

FIG. 8 is a view schematically illustrating a bus duct 400 installation configuration of a battery activation process facility according to still another embodiment of the present disclosure.

Referring to FIG. 8, the battery activation process facility according to still another embodiment of the present disclosure may be configured such that the bus duct 400 is disposed in the upper space of the catwalk 300 when compared with the above-described embodiments. Preferably, the bus duct 400 may be disposed in the vertical upper space of the floor plate 310 of the catwalk 300. The bus duct 400 may preferably be configured to be positioned approximately 10 cm to 30 cm higher than the average height of an adult from the floor plate 310 of the catwalk 300 for the accessibility of the workers.

To this end, a duct support unit 500A according to still another embodiment of the present disclosure may include a first support unit 560 having one side coupled to the first railing frame 320 and the other side coupled to the bus duct 400, and a second support unit 570 having one side coupled to the second railing frame 330 and the other side coupled to the bus duct 400. The first support unit 560 and the second support unit 570 may be configured as, for example, a beam made of metal, and may be configured to be coupled to the upper end of the first railing frame 320 and the upper end of the second railing frame 330 by welding, respectively, and to be coupled to the bus duct 400 by a bolt or the like.

Meanwhile, any mechanical coupling structure may be applied as long as the first support unit 560 and the second support unit 570 support the bus duct 400 and are fixedly coupled to the first railing frame 320 and the second railing frame 330.

In still another embodiment of the present disclosure, the plurality of distribution boxes 600 may be attached to the lower surface of the bus duct 400.

According to the embodiment as shown in FIG. 8, the configuration of the duct support unit 500A may be simplified, and the distance between the catwalk 300 and the bus duct 400 may be made closer than in the first embodiment described above. Accordingly, it may be easier for the workers to maintain and replace the bus duct 400 or the distribution box 600 on the catwalk 300. Additionally, the bus duct 400 may be supported more stably than in the second embodiment described above.

As described above, according to the battery activation process facility according to the present disclosure, the loss caused by constructing a bus duct on the ceiling of a factory or building as conventionally may be eliminated. Additionally, the battery activation process facility according to the present disclosure provides a catwalk at the uppermost end of the container rack like a bus duct, so that the workers may easily inspect and maintain tracks of the bus duct and perform work more safely than conventionally.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

Meanwhile, the terms indicating directions as used herein such as upper, lower, left, right, front, and back are used for convenience of description only, and it is obvious to those skilled in the art that the terms may vary depending on the position of an observer or a reference object.

## Claims

1. A battery activation process facility comprising:
a plurality of charging and discharging devices for charging and discharging battery cells;
a container rack configured to load the plurality of charging and discharging devices in multiple stages;
a catwalk installed at an uppermost end of the container rack as a passage for workers to pass through;
a bus duct positioned at a certain height from the uppermost end of the container rack; and
a duct support unit mounted on the container rack or the catwalk and supporting the bus duct.

2. The battery activation process facility according to claim 1,
wherein the container rack is provided in a plurality of layers, and each layer comprises a device receiving portion accommodating the charging and discharging devices; and a passage portion allowing the workers to pass through.

3. The battery activation process facility according to claim 2,
wherein the device receiving portion and the passage portion continue to be parallel to each other along a first direction, and
the catwalk and the bus duct are respectively installed above the device receiving portion and above the passage portion of the container rack positioned on an uppermost layer.

4. The battery activation process facility according to claim 3,
wherein the passage portion comprises a pair of upper beam frames spaced apart along a second direction intersecting the first direction and extending parallel to each other along the first direction, and
the duct support unit is fixedly coupled to the pair of upper beam frames at predetermined intervals along the pair of upper beam frames and is provided to support the bus duct below the bus duct.

5. The battery activation process facility according to claim 4,
wherein the duct support unit comprises:
a first beam connection portion and a second beam connection portion that are detachably attached to one side and the other side of the pair of upper beam frames, respectively;
a first vertical portion extending vertically from the first beam connection portion and a second vertical portion extending vertically from the second beam connection portion; and
a duct mounting portion that is connected to an upper end of the first vertical portion and an upper end of the second vertical portion and is provided to allow the bus duct to be seated and mounted.

6. The battery activation process facility according to claim 5,
wherein the bus duct comprises:
an enclosure having an internal space capable of accommodating a metal conductor; and
connection beams provided at both lower edge regions of the enclosure in the width direction of the enclosure,
wherein the connection beams comprise mounting grooves provided at predetermined intervals along the extension direction of the enclosure and fitted into the duct mounting portion.

7. The battery activation process facility according to claim 1, further comprising:
a plurality of distribution boxes coupled to the bus duct at predetermined intervals along the extension direction of the bus duct.

8. The battery activation process facility according to claim 7,
wherein the catwalk and the bus duct are disposed adjacent to each other in the width direction of the container rack, and
the plurality of distribution boxes are attached to one surface of the bus duct facing the catwalk.

9. The battery activation process facility according to claim 7,
wherein the catwalk comprises:
a floor plate fixedly coupled to the uppermost end of the container rack; and
a first railing frame and a second railing frame that are respectively disposed upright at both edges of the floor plate in the width direction.

10. The battery activation process facility according to claim 9,
wherein the bus duct is fixedly coupled to an upper end of any one of the first railing frame and the second railing frame.

11. The battery activation process facility according to claim 10,
wherein the plurality of distribution boxes are attached to an upper surface of the bus duct.

12. The battery activation process facility according to claim 9,
wherein the bus duct is disposed in a space above the floor plate of the catwalk, and
the duct support unit comprises:
a first support unit having one side coupled to the first railing frame and the other side coupled to the bus duct; and
a second support unit having one side coupled to the second railing frame and the other side coupled to the bus duct.

13. The battery activation process facility according to claim 12,
wherein the plurality of distribution boxes are attached to a lower surface of the bus duct.
